# EUROPEAN PATENT APPLICATION

(11) **EP 4 722 509 A1**
(43) Date of publication of application: **08.04.2026**
(21) Application number: 24815873.5
(22) Date of filing: 30.05.2024
(51) Int. Cl.: F01N 9/00, F01N 3/023, F02D 41/00, F02D 41/02

(54) **METHOD FOR REMOVING PARTICULATE MATTER**

(30) Priority: 30.05.2023 KR 20230069348
(71) Applicant: HD Hyundai Infracore Co., Ltd., Incheon 22502 (KR)
(72) Inventor: YU, Jinhwan, Incheon 22000 (KR)
(74) Representative: Isarpatent
(86) International application number: PCT/KR2024/007387
(87) International publication number: WO 2024/248499

(57) **Abstract**

The present invention relates to a particulate matter reduction method for reducing particulate matter emitted from an internal combustion engine using a Diesel Particulate Filter (DPF), wherein the particulate matter reduction method according to an embodiment of the present invention comprises: a step of operating in a regenerative operation mode to combust and remove deposited particulate matter when particulate matter in the Diesel Particulate Filter exceeds a preset allowable deposition amount; a step of operating in an efficiency enhancement mode to forcibly increase a soot amount to deposit particulate matter up to a preset initial deposition amount in the Diesel Particulate Filter after the regenerative operation mode is terminated; and a step of stopping the forced increase of the soot amount and operating in a normal operation mode when the efficiency enhancement mode is terminated.

## Description

### [TECHNICAL FIELD]

The present invention relates to a method for reducing particulate matter emitted from an internal combustion engine using a diesel particulate filter.

### [BACKGROUND ART]

In various devices that use internal combustion engines, harmful substances such as carbon monoxide (CO), sulfur oxides (SOx), hydrocarbons (HC), nitrogen oxides (NOx), and particulate matter (PM) are emitted through fuel combustion. Various exhaust gas regulations that regulate the amount of harmful substances emitted from internal combustion engines are becoming more stringent.

In recent years, as the harmful effects of ultrafine particles on the human body have become more important, regulations on the particulate number (PN), which limit the quantity of particulate matter (PM), have been applied in addition to regulations on the weight of particulate matter (PM).

Meanwhile, among internal combustion engines, diesel engines emit particulate matter (PM) with an average diameter of 1 µm or less, and diesel particulate filters (DPFs) are widely used to reduce particulate matter (PM) emitted from diesel engines.

However, as the amount of particulate matter deposited inside the diesel particulate filter (DPF) increases, the reduction efficiency increases only when it accumulates to a certain extent. When the amount of particulate matter deposited in the diesel particulate filter (DPF) increases to a limit and becomes clogged, it goes through a regeneration process that removes the deposited particulate matter by burning it at high temperatures.

In order to regenerate the diesel particulate filter by burning the particulate matter, i.e. soot, the diesel particulate filter must be heated to at least 550 degrees Celsius, and since diesel engines are always operated with excess air, the exhaust gas contains sufficient oxygen to internally burn the soot deposited in the diesel particulate filter (DPF).

However, if the diesel particulate filter is regenerated to remove all of the accumulated soot, the pore size of the diesel particulate filter is relatively larger than the size of the particulate matter, so soot easily passes through the diesel particulate filter, which lowers the particulate matter reduction efficiency and may fail to meet regulatory standards, especially the particulate number (PN) regulation standards.

### [DESCRIPTION OF THE INVENTION]

### [TECHNICAL PROBLEM]

An embodiment of the present invention can provide a particulate matter reduction method that can stably maintain particulate matter reduction efficiency even after regeneration of a diesel particulate filter without structural change or improvement of the diesel particulate filter.

### [SOLUTION TO THE PROBLEM]

According to an embodiment of the present invention, a method for reducing particulate matter emitted from an internal combustion engine using a diesel particulate filter includes the steps of: operating in a regenerative operation mode for removing deposited particulate matter by burning the deposited particulate matter when particulate matter in the Diesel Particulate Filter exceeds a preset allowable deposition amount; operating in an efficiency enhancement mode for forcibly increasing the amount of soot to deposit particulate matter up to a preset initial deposition amount in the diesel particulate filter after the regenerative operation mode is terminated; and stopping the forced increase in the amount of soot and operating in a normal operation mode when the efficiency enhancement mode is terminated.

According to the above-described particulate matter reduction method, the accumulated amount of soot emissions is calculated based on the soot emissions mapped to the engine's rotation speed (rpm) and torque as parameters, and when the accumulated amount of soot emissions reaches the target accumulated amount, the efficiency enhancement mode can be terminated.

In addition, according to the above-described particulate matter reduction method, the mapped soot emission amount can be corrected based on the engine air-fuel ratio.

In addition, according to the above-described particulate matter reduction method, even if the accumulated amount of soot emissions does not reach the target accumulated amount, the efficiency enhancement mode can be terminated when the accumulated operating time in the efficiency enhancement mode reaches a preset maximum allowable operating time.

In addition, in the above-described particulate matter reduction method, when the efficiency enhancement mode is terminated, the accumulated soot emission amount and the accumulated operating time can be initialized.

In addition, according to the above-described particulate matter reduction method, if an abnormal signal is detected in the electronic control unit (ECU) controlling the engine after the regenerative operation mode is terminated, the engine may operate in the normal operation mode without operating in the efficiency enhancement mode.

In addition, when operating in the efficiency enhancement mode, the exhaust gas recirculation (EGR) ratio can be increased to a range of more than 0% and less than or equal to 30% compared to when operating in the normal operation mode.

In addition, when operating in the efficiency enhancement mode, the pressure of the common rail can be reduced to a range of more than 0 bar and less than or equal to 500 bar compared to when operating in the normal operation mode.

In addition, when operating in the efficiency enhancement mode, the fuel injection timing of the engine can be delayed within a range of more than 0 degrees and less than or equal to 20 degrees based on the rotation angle of the crankshaft compared to when operating in the normal operation mode.

In addition, when operating in the efficiency enhancement mode, the instantaneous maximum fuel injection amount limit or the instantaneous maximum torque limit for soot suppression can be increased compared to when operating in the normal operation mode.

In addition, when operating in the efficiency enhancement mode, the throttle position can be controlled by partially closing it compared to when operating in the normal operation mode.

### [ADVANTAGEOUS EFFECTS OF THE INVENTION]

According to an embodiment of the present invention, a method for removing particulate matter can effectively meet exhaust gas regulations by stably maintaining particulate matter reduction efficiency even after regeneration of a diesel particulate filter without structural change or improvement of the diesel particulate filter.

### [BRIEF DESCRIPTION OF DRAWINGS]

FIG. 1 illustrates the concept of a particulate matter removal method according to an embodiment of the present invention.
FIG. 2 is a schematic diagram showing the overall logic of an efficiency enhancement mode used in a particulate matter removal method according to one embodiment of the present invention.
FIG. 3 shows a detailed configuration of the control mode determination unit of FIG. 2.
FIG. 4 is a flowchart showing a method for removing particulate matter according to one embodiment of the present invention.
FIG. 5 is a schematic diagram showing the logic of an efficiency mode control unit that performs an efficiency enhancement mode.

### [MODES FOR CARRYING OUT THE INVENTION]

Hereinafter, embodiments of the present invention will be described in detail with reference to the accompanying drawings so that a person having ordinary skill in the art to which the present invention pertains can readily implement them. The present invention may be implemented in various different forms and is not limited to the embodiments described herein.

It is noted that the drawings are schematic and not drawn to scale. The relative dimensions and proportions of parts in the drawings may be exaggerated or reduced for clarity and convenience, and any dimensions illustrated are merely exemplary and not intended to be limiting. In addition, when identical structures, elements, or parts appear in more than one drawing, the same reference numerals are used to indicate similar features.

The embodiments of the present invention specifically illustrate ideal embodiments of the present invention. As a result, various modifications of the illustrations are expected. Therefore, the embodiments are not limited to the specific shapes of the areas shown, but also include, for example, variations in shape resulting from manufacturing.

Additionally, all technical and scientific terms used in this specification, unless otherwise defined, have the meaning commonly understood by a person of ordinary skill in the art to which the present invention pertains. All terms used in this specification have been selected for the purpose of more clearly describing the present invention and have not been selected to limit the scope of rights according to the present invention.

Additionally, expressions such as "including," "comprising," and "having" used in this specification should be understood as open-ended terms that imply the possibility of including other embodiments, unless otherwise stated in the phrase or sentence in which the expression is included.

Additionally, the singular expressions used herein may include plural meanings unless otherwise specified, and the same shall apply to the singular expressions used in the claims.

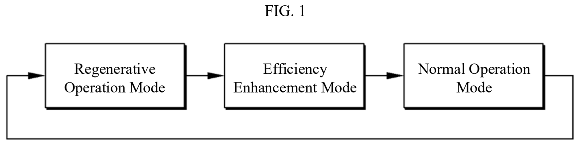

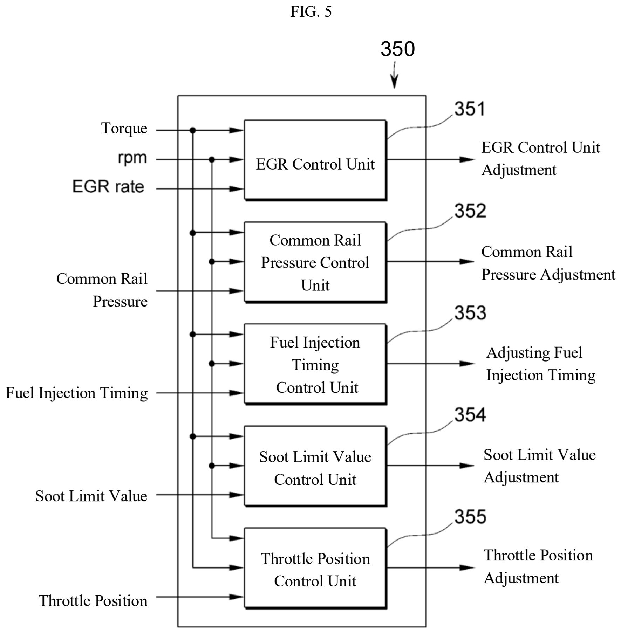

Hereinafter, a method for removing particulate matter according to one embodiment of the present invention will be described with reference to FIGS. 1 and 5.

Specifically, a method for removing particulate matter according to one embodiment of the present invention relates to a method for reducing particulate matter emitted from an internal combustion engine using a diesel particulate filter. For example, the internal combustion engine may be a diesel engine, and the particulate matter removal method may be applied to various devices that use diesel engines.

FIG. 1 illustrates the concept of a particulate matter removal method according to an embodiment of the present invention.

As illustrated in FIG. 1, a method for removing particulate matter according to one embodiment of the present invention operates in a regenerative operation mode, an efficiency enhancement mode, and a normal operation mode.

When the amount of deposit in a diesel particulate filter (DPF) increases and particulate matter is deposited exceeding a preset allowable deposition amount, the deposited particulate matter is removed by burning it through a regenerative operation mode according to a particulate matter removal method according to an embodiment of the present invention.

That is, the regenerative operation mode can be selected to remove the deposited particulate matter by burning it when the particulate matter is excessively deposited in the diesel particulate filter.

Here, the preset allowable deposition amount can be set in various ways depending on the specifications of the diesel particulate filter, the specifications and operating conditions of the internal combustion engine that emits particulate matter, and the operating conditions of the device in which the internal combustion engine is used. For example, the preset allowable deposition amount may be a level of 30% of a state in which the diesel particulate filter is completely clogged by particulate matter.

When the regenerative operation mode is terminated, the efficiency enhancement mode is operated so that the particulate matter reduction efficiency of the diesel particulate filter reaches an allowable range.

When a diesel particulate filter is regenerated to remove all of the soot deposited in the diesel particulate filter, the pore size of the diesel particulate filter is much larger than the size of the particulate matter, so after the diesel particulate filteris regenerated, soot easily passes through the diesel particulate filter, and the particulate matter reduction efficiency is lowered.

Accordingly, in a method for reducing particulate matter according to one embodiment of the present invention, soot is forcibly deposited in a diesel particulate filter through an efficiency enhancement mode.

That is, the efficiency enhancement mode forcibly increases the amount of soot so that the particulate matter reduction efficiency of the diesel particulate filter from which particulate matter has been removed reaches the above-mentioned reference range after the regenerative operation mode ends, thereby depositing particulate matter to a preset deposition amount in the diesel particulate filter.

That is, the efficiency enhancement mode forcibly increases the amount of soot so that the particulate matter reduction efficiency of the diesel particulate filter from which particulate matter has been removed reaches the allowable range after the regenerative operation mode is terminated, thereby depositing particulate matter up to a preset initial deposition amount in the diesel particulate filter. For example, the preset initial deposition amount may be a level of 1% of a state in which the diesel particulate filter is completely clogged by particulate matter.

Next, when the efficiency enhancement mode ends, the forced increase in soot amount is stopped and the engine operates in normal operation mode.

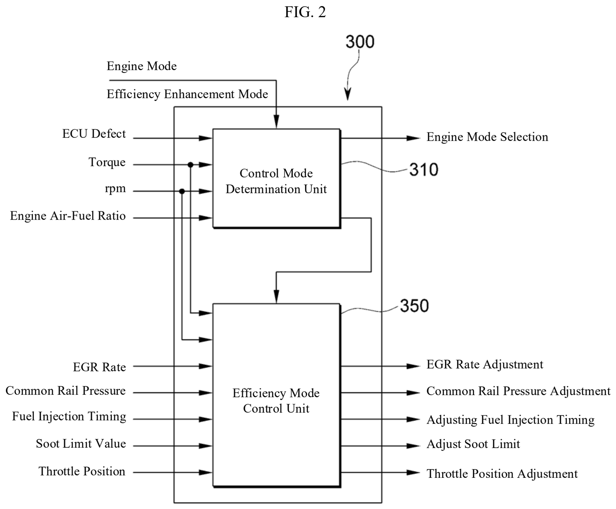

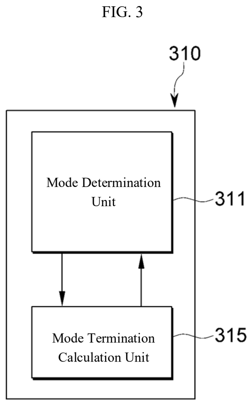

FIG. 2 shows the overall logic of the efficiency enhancement mode used in the particulate matter removal method according to one embodiment of the present invention, and FIG. 3 shows the detailed configuration of the control mode determination unit (310).

As illustrated in FIG. 2, the efficiency enhancement mode can be implemented through the control mode determination unit (310) and the efficiency mode control unit (350).

The control mode determination unit (310) determines the start and end of the efficiency enhancement mode, and changes the engine's operation mode to the normal operation mode according to the end of the efficiency enhancement mode. That is, the control mode determination unit (310) changes to the efficiency enhancement mode when the regenerative operation mode ends, and changes to the normal operation mode when the efficiency enhancement mode ends. At this time, the control mode determination unit (310) can control the engine to operate in the normal operation mode immediately without operating in the efficiency enhancement mode when an abnormal signal is detected in the electronic control unit (ECU) that controls the engine after the regenerative operation mode is terminated.

In addition, as illustrated in FIG. 3, the control mode determination unit (310) may include a mode determination unit (311) that determines the current operation mode and a mode termination calculation unit (315) that determines the timing of changing the mode. For example, the mode termination calculation unit (315) calculates the termination time of the efficiency enhancement mode, and the mode determination unit (311) terminates the efficiency enhancement mode and changes to the normal operation mode according to the termination time calculated by the mode termination calculation unit (315).

In addition, in a method for reducing particulate matter according to one embodiment of the present invention, the accumulated amount of soot emissions is calculated based on the soot emissions mapped to the engine's rotation speed (rpm) and torque as parameters. That is, the cumulative amount of soot emissions can be calculated by substituting the actual measured engine speed and torque into the data on soot emissions compared to the engine speed and torque obtained through testing. And when the accumulated soot emissions reach the target accumulated amount, the efficiency enhancement mode is terminated.

In addition, according to a method for reducing particulate matter according to one embodiment of the present invention, when calculating the cumulative amount of soot emissions, the mapped soot emissions can be corrected based on the engine air-fuel ratio. That is, correction of soot emissions can be performed by substituting the actually measured engine air-fuel ratio into data on changes in soot emissions due to changes in engine air-fuel ratio obtained through testing.

Additionally, even if the accumulated amount of soot emissions does not reach the target accumulated amount, the efficiency enhancement mode can be terminated when the accumulated operating time in the efficiency enhancement mode reaches a preset maximum allowable operating time. Here, the preset maximum allowable operating time can be set in various ways taking into account the type and performance of the engine and exhaust gas regulations.

Additionally, when the efficiency enhancement mode ends, the accumulated soot emissions and accumulated operating time can be initialized. Accordingly, it is possible to determine the termination time of the efficiency enhancement mode when the efficiency enhancement mode starts after the regenerative operation mode is performed again.

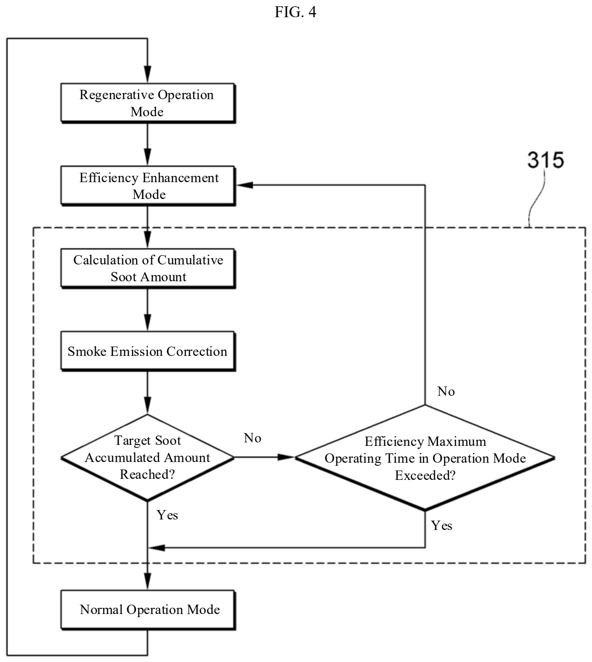

FIG. 4 shows the operation sequence of a particulate matter removal method according to one embodiment of the present invention.

As shown in FIG. 4, when particulate matter is excessively deposited in the diesel particulate filter during operation in the normal operation mode, that is, when it exceeds a preset allowable deposition amount, the regenerative operation mode is started. And the box indicated by a dotted line in FIG. 4 represents an operation performed by the mode termination calculation unit (315).

When all particulate matter deposited in the diesel particulate filter is removed, the particulate matter reduction efficiency falls below the allowable range, so the engine operates in the efficiency enhancement mode after the regenerative operation mode is terminated. And the termination time of the efficiency enhancement mode is calculated in the aforementioned mode termination calculation unit (315).

The mode termination calculation unit (315) calculates the cumulative amount of soot emissions based on the soot emissions mapped using the engine's rotation speed (rpm) and torque as parameters, and corrects the mapped soot emissions based on the engine air-fuel ratio. When the accumulated amount of soot emissions calculated in this way reaches the target accumulated amount, the efficiency enhancement mode is terminated. And if the accumulated soot emission amount does not reach the target accumulated amount, the efficiency enhancement mode continues. At this time, if the accumulated operating time in the efficiency enhancement mode reaches the preset maximum allowable operating time, the efficiency enhancement mode is terminated. And when the efficiency enhancement mode ends, it switches to normal operation mode.

As described above, according to the method for removing particulate matter according to one embodiment of the present invention, the termination time of the efficiency enhancement mode is double-checked, thereby preventing excessive operation in the efficiency enhancement mode. Since the amount of soot is forcibly increased in the efficiency enhancement mode, it is not desirable to operate excessively in the efficiency enhancement mode.

FIG. 5 shows the logic of an efficiency mode control unit (350) that performs an efficiency enhancement mode to forcibly increase the amount of soot to deposit particulate matter in a diesel particulate filter.

The efficiency mode control unit (350) can perform the efficiency enhancement mode in one or more methods selected from among various methods described below.

The first is to adjust the exhaust gas recirculation ratio to forcibly increase the amount of soot. This can be implemented through an exhaust gas recirculation (EGR) control unit (351).

For example, when operating in the efficiency enhancement mode, the exhaust gas recirculation control unit (351) can increase the exhaust gas recirculation (EGR) ratio to a range of more than 0% and less than or equal to 30% compared to when operating in the normal operation mode.

A second method is to adjust the pressure of the common rail to forcibly increase the amount of soot. This can be implemented through the common rail pressure control unit (352).

For example, when operating in the efficiency enhancement mode, the common rail pressure control unit (352) can reduce the pressure of the common rail to a range of more than 0 bar and less than or equal to 500 bar compared to when operating in the normal operation mode.

Thirdly, there is a method of adjusting the engine's fuel injection timing to forcibly increase the amount of soot. This can be implemented through the fuel injection timing control unit (353).

For example, when operating in the efficiency enhancement mode, the fuel injection timing control unit (353) can delay the fuel injection timing of the engine by a range of more than 0 degrees and less than or equal to 20 degrees based on the rotation angle of the crankshaft compared to when operating in normal operation mode.

Taking a four-stroke engine as an example, the engine cycle consists of four piston strokes: intake, compression, power, and exhaust. That is, one cycle is completed during two rotations of the crankshaft. And the cylinder head of the engine is equipped with an intake valve and an exhaust valve for each cylinder, and the opening and closing of the intake valve and exhaust valve are performed by the rotation of the camshaft that rotates in conjunction with the crankshaft. At this time, the camshaft rotates while connected to the crankshaft by a timing chain or the like, and the camshaft rotates once while the crankshaft rotates twice. And the fuel is injected at a preset crankshaft rotation angle.

Fourthly, there is a method of increasing the instantaneous maximum fuel injection amount limit or the instantaneous maximum torque limit for soot suppression to forcibly increase the soot amount. This can be implemented through the soot limit control unit (354).

For example, when operating in the efficiency enhancement mode, the soot limit control unit (354) can increase the instantaneous maximum fuel injection amount limit or the instantaneous maximum torque limit for soot suppression compared to when operating in the normal operation mode.

The amount of soot generated varies depending on the engine's operating conditions, and in the normal operation mode, the engine's operating conditions can be set so that soot is not generated by applying a preset instantaneous maximum fuel injection amount limit or instantaneous maximum torque limit for soot suppression. And when operating in the efficiency enhancement mode, the operating conditions may be changed to cause the engine to produce more soot by increasing the instantaneous maximum fuel injection limit or the instantaneous maximum torque limit for soot suppression.

Fifthly, there is a method of adjusting the throttle position to forcibly increase the amount of soot. This can be implemented through the throttle position control unit (355).

For example, when operating in the efficiency enhancement mode, the throttle position control unit (355) controls the throttle position to be partially closed compared to when operating in the normal operation mode. Here, partial closure means a closed state in the range of more than 0% and less than or equal to 80%, when the throttle position is defined as a fully open state as 0% and a fully closed state as 100%.

In this way, according to the method for reducing particulate matter according to one embodiment of the present invention, the efficiency enhancement mode forcibly increases the amount of soot in one or more ways selected from the five methods described above, thereby causing particulate matter to be deposited in the diesel particulate filter.

The method for reducing particulate matter according to one embodiment of the present invention as described above can effectively meet exhaust gas regulations by stably maintaining particulate matter reduction efficiency even after regeneration of a diesel particulate filter without structural change or improvement of the diesel particulate filter.

Although the embodiments of the present invention have been described with reference to the accompanying drawings, those skilled in the art will understand that the present invention can be implemented in other specific forms without changing the technical spirit or essential features thereof.

Therefore, the embodiments described above should be understood as being exemplary and not limiting in all respects, and the scope of the present invention is indicated by the appended claims rather than the foregoing detailed description, and all changes or modifications derived from the meaning and scope of the claims and their equivalent concepts should be interpreted as being included in the scope of the present invention.

### [REFERENCE NUMERALS]

| | | | |
|---|---|---|---|
| 310: | Control Mode Determination Unit | 311: | Mode Determination Unit |
| 315: | Mode Termination Calculation Unit | 350: | Efficiency Mode Control Unit |
| 351: | Exhaust Gas Recirculation Control Unit | 352: | Common Rail Pressure Control Unit |
| 353: | Fuel Injection Timing Control Unit | 354: | Soot Limit Control Unit |
| 355: | Throttle Position Control Unit | | |

### [INDUSTRIAL APPLICABILITY]

The present invention can be used to provide a method for reducing particulate matter that can stably maintain particulate matter reduction efficiency even after regeneration of a diesel particulate filter without structural change or improvement of the diesel particulate filter.

## Claims

1. A particulate matter reduction method for reducing particulate matter emitted from an internal combustion engine using a Diesel Particulate Filter (DPF), the method comprising:
a step of operating in a regenerative operation mode to combust and remove deposited particulate matter when particulate matter in the Diesel Particulate Filter exceeds a preset allowable deposition amount;
a step of operating in an efficiency enhancement mode to forcibly increase a soot amount to deposit particulate matter up to a preset initial deposition amount in the Diesel Particulate Filter after the regenerative operation mode is terminated; and
a step of stopping the forced increase of the soot amount and operating in a normal operation mode
when the efficiency enhancement mode is terminated.

2. The particulate matter reduction method of claim 1, wherein
an accumulated amount of soot emissions is calculated based on a soot emission amount mapped with an engine's rotation speed (rpm) and torque as parameters, and the efficiency enhancement mode is terminated when the accumulated amount of soot emissions reaches a target accumulated amount.

3. The particulate matter reduction method of claim 2, wherein
correcting the mapped soot emission amount based on an engine air-fuel ratio.

4. The particulate matter reduction method of claim 2, wherein
even if the accumulated amount of soot emissions does not reach the target accumulated amount, the efficiency enhancement mode is terminated when an accumulated operating time in the efficiency enhancement mode reaches a preset maximum allowable operating time.

5. The particulate matter reduction method of claim 4, wherein
initializing the accumulated amount of soot emissions and the accumulated operating time when the efficiency enhancement mode is terminated.

6. The particulate matter reduction method of claim 1, wherein
if an abnormal signal is detected in an electronic control unit (ECU) controlling the engine after the regenerative operation mode is terminated, the method operates in the normal operation mode without operating in the efficiency enhancement mode.

7. The particulate matter reduction method of claim 1, wherein
when operating in the efficiency enhancement mode,
an exhaust gas recirculation (EGR) ratio is increased to a range of more than 0% and less than or equal to 30% compared to when operating in the normal operation mode.

8. The particulate matter reduction method of claim 1, wherein
when operating in the efficiency enhancement mode,
a pressure of a common rail is reduced to a range of more than 0 bar and less than or equal to 500 bar compared to when operating in the normal operation mode.

9. The particulate matter reduction method of claim 1, wherein
when operating in the efficiency enhancement mode,
a fuel injection timing of the engine is delayed to a range of more than 0 degrees and less than or equal to 20 degrees based on a rotation angle of a crankshaft, compared to when operating in the normal operation mode.

10. The particulate matter reduction method of claim 1, wherein
when operating in the efficiency enhancement mode,
an instantaneous maximum fuel injection amount limit or an instantaneous maximum torque limit for soot suppression is increased compared to when operating in the normal operation mode.

11. The particulate matter reduction method of claim 1, wherein
when operating in the efficiency enhancement mode,
a throttle position is controlled to be partially closed compared to when operating in the normal operation mode.
